# FASCICULE DE BREVET EUROPEEN

(11) **EP 1 919 724 B1**
(45) Date de publication et mention de la délivrance du brevet: **25.01.2012**
(21) Numéro de dépôt: 06794331.6
(22) Date de dépôt: 16.08.2006
(51) Int. Cl.: B60H 1/00, B62D 25/14

(54) **TRAVERSE AERAULIQUE POUR VEHICULE AUTOMOBILE**
LUFTTECHNISCHES QUERGLIED FÜR EIN KRAFTFAHRZEUG
AERAULIC CROSSMEMBER FOR A MOTOR VEHICLE

(30) Priorité: 31.08.2005 FR 0508941
(43) Date de publication de la demande: 14.05.2008
(73) Titulaire: Faurecia Interieur Industrie, 92000 Nanterre (FR)
(72) Inventeur: BRUNARD, Christophe, F-92270 Bois Colombes (FR)
(74) Mandataire: Domenego, Bertrand
(86) Numéro de dépôt international: PCT/FR2006/001950
(87) Numéro de publication internationale: WO 2007/026063

(56) Documents cités:
- EP-A1- 1 609 637
- WO-A-2006/002996
- DE-A1- 10 005 718
- DE-C1- 19 703 519
- FR-A- 2 789 043

## Description

La présente invention concerne une traverse aéraulique pour véhicule automobile du type comportant une poutre sous forme d'un profilé formant un canal suivant la longueur de la poutre, ledit canal présentant une ouverture sur une de ses faces latérales, et renfermant un conduit en matière isolante rigide présentant également une ouverture délimitée par une bouche en vis-à-vis de l'ouverture du canal, la bouche en matière isolante étant à l'intérieur du canal. I

Les traverses aérauliques se retrouvent dans les véhicules automobiles, particulièrement, comme élément des traverses de planche de tableau de bord.

Outre leurs fonctions dans la rigidité du véhicule, elles sont utilisées pour amener le flux d'air provenant du climatiseur ou de l'appareil de chauffage jusqu'aux aérateurs disposés sur la planche de bord. Elles comportent donc un conduit en matière isolante pour conduire ce flux d'air jusqu'à l'habitacle en préservant ses propriétés calorifiques.

En effet, la traverse est métallique. Faire passer l'air directement dans le tube métallique induit des pertes calorifiques importantes de l'air transporté. Il est donc nécessaire de doubler la traverse métallique par une matière moins conductrice que le métal. Les traverses aérauliques comprennent en général un conduit aéraulique en matière plastique disposé à l'intérieur de la traverse métallique.

II existe de nombreux modes de réalisation d'une traverse aéraulique à conduits en matière plastique.

Suivant un premier mode, le conduit intérieur est surmoulé dans la traverse métallique tubulaire par une matière plastique. Cela est complexe à mettre au point.

Suivant un deuxième mode, le conduit plastique est introduit dans le canal.

Dans une première variante, le conduit est introduit dans le canal au cours de sa fabrication par exemple en deux demi-coques métallique rapportées l'une sur l'autre. Dans ce cas le conduit présente une partie émergeante assurant classiquement la liaison avec l'aérateur.

Dans une deuxième variante, la poutre métallique est d'abord fabriquée, et présente, au moins partiellement, une zone tubulaire. Dans ce cas, le conduit est introduit dans la traverse par glissement dans le canal tubulaire et de ce fait il ne présente aucune partie émergeante.

Dans une troisième variante, la traverse aéraulique est fabriquée par pliage d'une tôle de telle sorte que la section de la traverse a la forme d'un 6 ou d'un 8. La zone fermée, ou l'une des zones fermées dans le cas d'une forme en 8, forme un canal dans lequel on introduit le conduit en matière isolante par glissement.

Par ailleurs, la partie supérieure du profilé en 6 est aussi considérée comme une zone tubulaire même si elle n'est pas complètement fermé et peut aussi contenir un conduit en matière isolante pour canaliser le flux gazeux.

A l'emplacement prévu pour un aérateur, une ouverture est pratiquée dans le canal ainsi que dans le conduit.

Cependant, dans les deux dernières variantes de fabrication, l'ouverture du conduit se trouve à l'intérieur du canal. En conséquence, il se pose le problème de relier le conduit à l'aérateur en respectant les contraintes aérauliques de l'ensemble.

Le but de l'invention est donc de résoudre ce problème.

DE 100 05 718 décrit une traverse aéraulique selon le préambule de la revendication 1.

DE 197 03 519 décrit un dispositif d'interfaçage prévu pour raccorder entre eux des conduits aérauliques.

L'objet de l'invention est donc une traverse aéraulique selon la revendication 1 pour véhicule automobile du type comportant une poutre sous forme d'un profilé formant un canal suivant la longueur de la poutre, ledit canal présentant une ouverture sur une de ses faces latérales, et renfermant un conduit en matière isolante rigide présentant également une ouverture délimitée par une collerette en vis-à-vis de l'ouverture du canal et de dimension légèrement inférieure à celle-ci, l'ouverture du conduit en matière isolante étant à l'intérieur du canal, caractérisé en ce que ladite traverse comporte un dispositif d'interfaçage sous forme d'un manchon traversant l'ouverture du canal pour relier de manière étanche la collerette de l'ouverture du conduit à un aérateur situé à l'extérieur de ladite traverse.

D'autres caractéristiques de l'invention sont :
- le dispositif d'interfaçage comporte un joint comportant deux lèvres pour enserrer la collerette du conduit.
- les lèvres ont un écartement au repos inférieur à l'épaisseur de la collerette.
- le dispositif d'interfaçage comporte sur sa face extérieure un épaulement venant en appui sur la face extérieure du canal.
- le dispositif d'interfaçage comporte sur sa face extérieure plusieurs languettes de clippage pour prendre appui sur la face intérieure du canal.
- l'épaulement et les languettes de clippage enserrent le bord de l'ouverture du canal de telle sorte que le dispositif d'interfaçage est fixé rigidement sur ledit canal.

Selon un second aspect, l'invention porte sur un ensemble selon la revendication 7.

Selon un troisième aspect, l'invention porte sur une planche de bord selon la revendication 8.

L'invention sera mieux comprise à la lecture de la description qui va suivre, donnée uniquement à titre d'exemple, et faite en référence aux dessins en annexe dans lesquels :
- la figure 1 est une vue en section d'une planche de bord de véhicule automobile comportant une traverse aéraulique avec son dispositif d'interfaçage selon l'invention, et un aérateur ;
- la figure 2 est une vue de face d'une traverse selon l'invention ;
- la figure 3 est une vue en section à plus grande échelle de la traverse de la figure 2 ;
- la figure 4 est une vue en section selon IV-IV de la traverse de la figure 2 ;
- la figure 5 est une vue en section selon V-V de la traverse de la figure 2 ;
- la figure 6A est une vue en coupe d'un détail d'un dispositif d'interfaçage au repos ; et
- la figure 6B est une vue en coupe du même dispositif d'interfaçage de la figure 6A positionné sur la traverse.

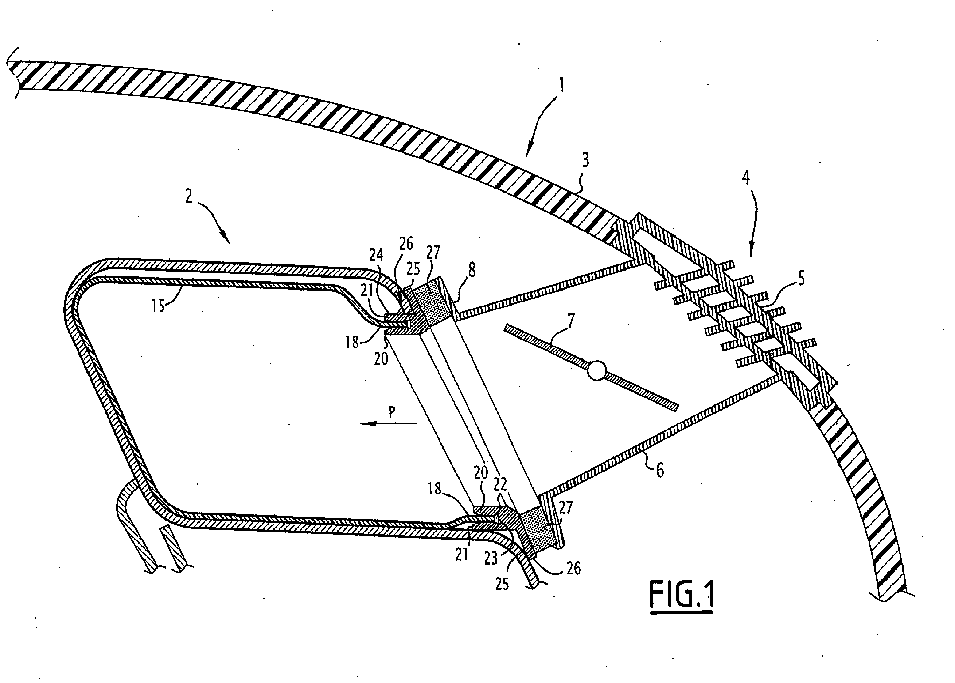

Tel que représenté sur la figure 1, une planche de bord 1 de véhicule automobile comprend une traverse aéraulique 2 assurant une fonction structurelle pour le véhicule, c'est-à-dire qu'elle participe à la rigidification de la structure du véhicule. Elle est propre également à assurer le transport de l'air vers les passagers du véhicule et enfin le support de certains composants tels qu'une colonne de direction ou un dispositif de sécurité à sac gonflable.

La planche de bord 1 présente une coiffe 3 portée par la traverse aéraulique 2. La coiffe 3 définit la forme extérieure de la planche de bord et le support de certains éléments. En particulier, des aérateurs 4 traversent la coiffe 3 pour acheminer de l'air de la traverse aéraulique 2 vers l'intérieur de l'habitacle.

L'aérateur 4 comporte comme connu en soi une grille 5 plaquée sur la coiffe 3 et prolongée vers la traverse aéraulique 2 en arrière de la coiffe 3 par un col 6 équipé d'un obturateur mobile 7. Le col 6 est formé d'un conduit généralement tubulaire et présente une collerette 8 extérieure de liaison.

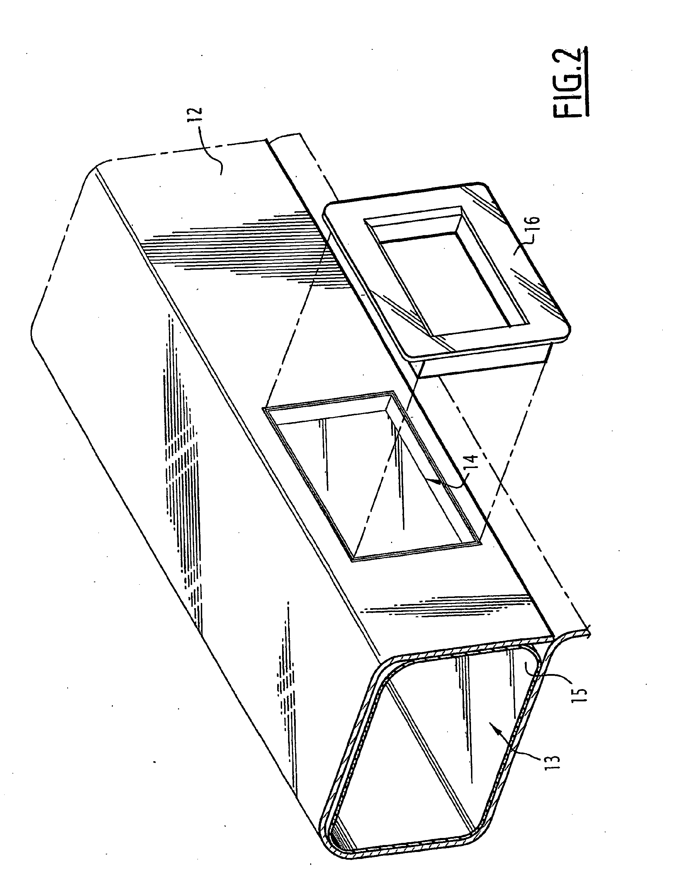

La traverse aéraulique 2 pour véhicule automobile comporte, figure 2, une poutre 12 sous forme d'un profilé formant un canal 13 suivant la longueur de cette poutre.

Le canal présente une ouverture 14 sur une de ses faces latérales.

II renferme un conduit 15 en matière isolante rigide présentant également une ouverture en vis-à-vis de l'ouverture du canal et de dimension légèrement inférieure à celle-ci.

La traverse aéraulique comporte également un dispositif d'interfaçage 16 ayant la forme d'un manchon.

Ce dispositif d'interfaçage 16 se positionne dans l'ouverture 14 du canal.

L'aérateur 4 est fixé sur le dispositif d'interfaçage 16 par la collerette 8.

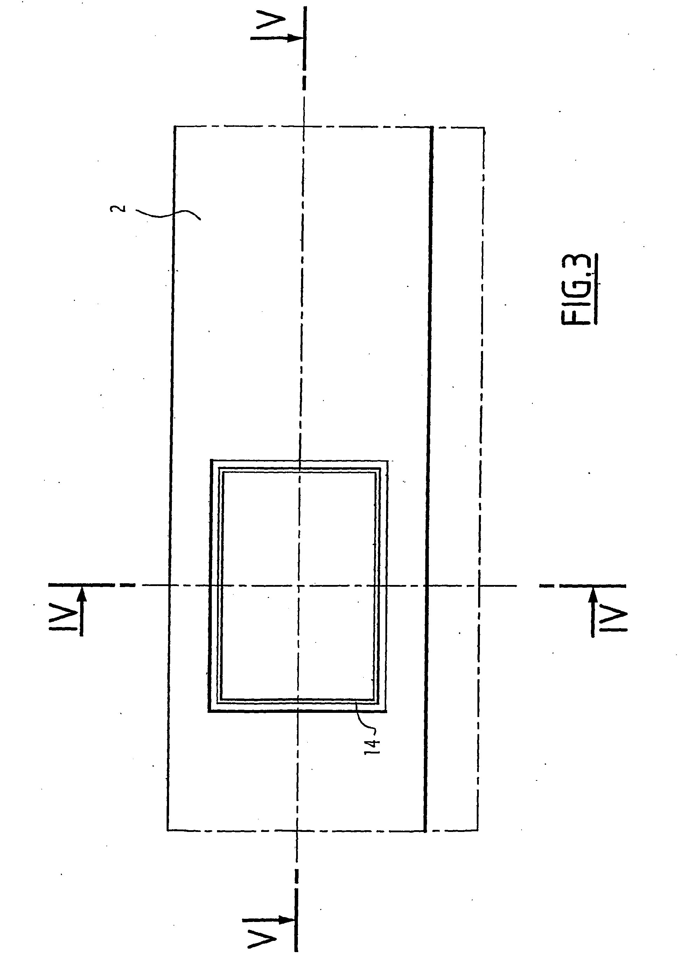

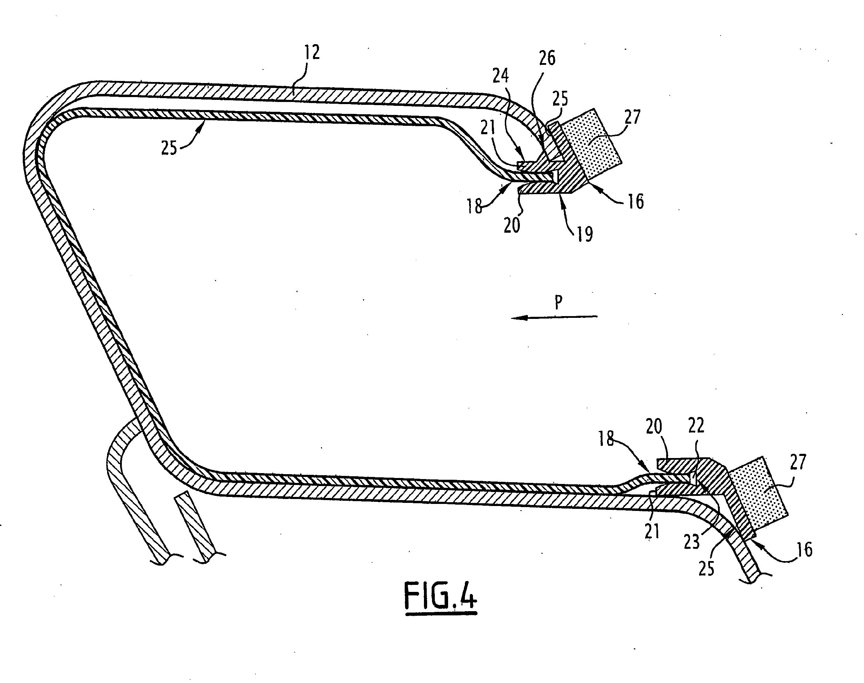

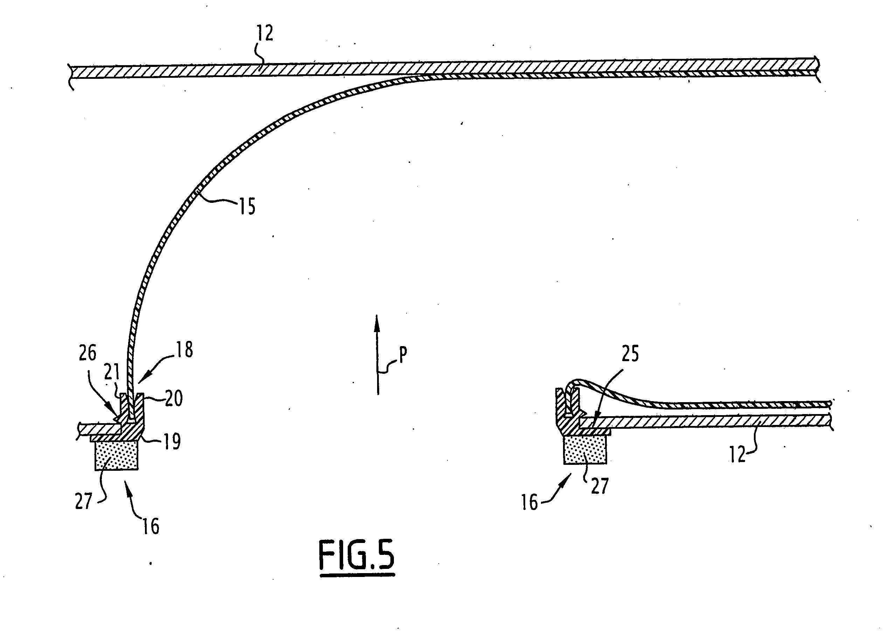

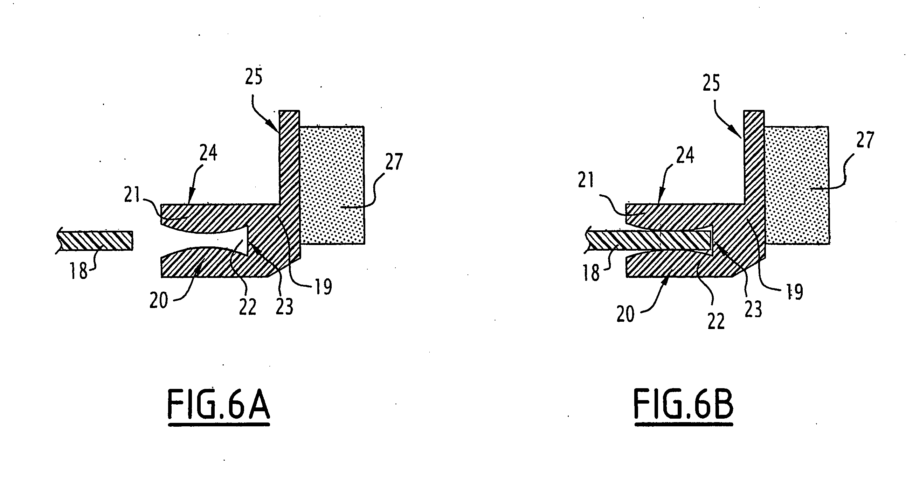

L'ouverture du conduit 15 est délimitée par une bouche annulaire 18, figures 3, 4, 5, 6A et 6B.

Le dispositif d'interfaçage 16 comporte sur sa face avant, par rapport à l'orientation donnée par la flèche P, un joint 19 ayant deux lèvres 20, 21 qui enserrent la bouche 18 du conduit. Ces lèvres 20 et 21 sont faites dans un matériau élastique.

Les lèvres 20, 21 délimitent une rainure 22 dont le fond 23 a une largeur supérieure à l'écartement minimal des lèvres 20, 21 au repos, c'est-à-dire quand le dispositif d'interfaçage 16 n'est pas fixé sur la bouche 18.

Le dispositif d'interfaçage 16 comporte également sur sa face extérieure 24 un épaulement 25 ainsi que plusieurs languettes de clippage 26.

Dans les zones contenant une languette de clippage 26, la surface extérieure 24 est positionnée de telle sorte que la distance entre la face extérieure 24 du dispositif d'interfaçage et le bord de l'ouverture 14 du canal 13 est inférieure à l'épaisseur au repos des languettes, de façon à ce que les languettes de clippage viennent en appui sur la face intérieure du canal 13.

Le dispositif d'interfaçage 16 comporte de plus, sur sa face arrière par rapport à l'orientation donnée par la flèche P, un joint 27 en matériau déformable ayant approximativement la forme de la zone externe de la collerette 28 du col de l'aérateur de façon à assurer l'étanchéité entre le dispositif d'interfaçage 16 et l'aérateur 4.

Le dispositif d'interfaçage 16 une longueur axiale, c'est-à-dire dans l'axe de la flèche P, comprise préférentiellement entre 5 et 20 mm.

Lors du montage, le dispositif d'interfaçage est poussé vers l'intérieur du canal selon le sens de la flèche P. Les lèvres 20, 21 qui ont un écartement au repos inférieur à l'épaisseur de la paroi de la bouche 18, s'écartent sous l'effet de la pression exercée par cette bouche 18. Ayant une certaine élasticité, elles pincent étroitement la collerette 8 et assurent ainsi l'étanchéité entre le conduit 15 et le dispositif d'interfaçage 16.

Les languettes de clippage 26 sont poussées à l'intérieur de l'ouverture du canal 13, en se rétractant pendant le passage du bord de cette ouverture.

Le dispositif d'interfaçage est poussé jusqu'à ce que l'épaulement 25 vienne en appui sur la face extérieure du canal 13. A ce moment, les languettes de clippage 26 sont positionnées à l'intérieur du canal 13 et elles reprennent leur position au repos. Le bord de l'ouverture du canal 13 est ainsi enserré entre l'épaulement 25 et les languettes de clippage 26.

Ceci permet avantageusement de fixer rigidement le dispositif d'interfaçage 16 sur la poutre 12. Le dispositif d'interfaçage 16 étant également solidaire du conduit 15 grâce au joint 19 à lèvres, cela permet avantageusement de solidariser le conduit 15 et la poutre 12.

Dans une variante de réalisation, le joint 27 est fixé à la collerette 8 du col 6, et non à la face arrière du dispositif d'interfaçage 16 comme dans le mode de réalisation précédemment décrit. L'aérateur 4 est alors relié au dispositif d'interfaçage 16 par le placage du joint 27 sur celui-ci.

## Revendications

1. Traverse (2) aéraulique pour véhicule automobile, du type comportant une poutre (12) sous forme d'un profilé formant un canal (13) suivant la longueur de la poutre, ledit canal présentant au moins partiellement une zone tubulaire ainsi qu'une ouverture (14) sur une de ses faces latérales, et renfermant un conduit (15) en matière isolante rigide présentant également une ouverture délimitée par une bouche (18) en vis-à-vis de l'ouverture du canal, la bouche du conduit (15) en matière isolante étant à l'intérieur du canal (13), **caractérisé en ce que** la bouche (18) est de dimension légèrement inférieure à celle de l'ouverture (14) du canal (13), ladite traverse (2) comportant un dispositif d'interfaçage (16) sous forme d'un manchon traversant l'ouverture (14) du canal pour relier de manière étanche la bouche (18) de l'ouverture du conduit à un aérateur (17) situé à l'extérieur de ladite traverse (2), et **en ce que** le dispositif d'interfaçage a une longueur axiale comprise entre 5 et 20 millimètres].

2. Traverse aéraulique selon la revendication 1, **caractérisé en ce que** le dispositif d'interfaçage (16) comporte un joint (19) comportant deux lèvres (20,21) pour enserrer la bouche (18) du conduit.

3. Traverse aéraulique selon la revendication 2, **caractérisé en ce que** les lèvres (20,21) ont un écartement au repos inférieur à l'épaisseur de la paroi de la bouche (18).

4. Traverse aéraulique selon l'une quelconque des revendications précédentes, **caractérisé en ce que** le dispositif d'interfaçage (16) comporte sur sa face extérieure (24) un épaulement (25) venant en appui sur la face extérieure du canal.

5. Traverse aéraulique selon l'une quelconque des revendications précédentes, **caractérisé en ce que** le dispositif d'interfaçage (16) comporte sur sa face extérieure (24) plusieurs languettes de clippage (26) pour prendre appui sur la face intérieure du canal.

6. Traverse aéraulique selon les revendications 4 et 5, **caractérisé en ce que** l'épaulement (25) et les languettes de clippage (26) enserrent le bord de l'ouverture du canal (13) de telle sorte que le dispositif d'interfaçage (16) est fixé rigidement sur ledit canal.

7. Ensemble comportant un aérateur (4) et une traverse aéraulique (2) selon l'une quelconque des revendications précédentes, **caractérisé en ce que** le dispositif d'interfaçage (16) comportant un joint (27) extérieur en matériau déformable apte à assurer l'étanchéité entre ledit dispositif d'interfaçage (16) et l'aérateur (4).

8. Planche de bord de véhicule automobile comportant une traverse (2) selon l'une quelconque des revendications précédentes, une coiffe (3) portée par la traverse (2) et un aérateur (4) traversant la coiffe (3) et connecté sur la traverse aéraulique (2).

## Claims

1. A ventilation crossmember (2) for a motor vehicle, the crossmember being of a type comprising a beam (12) in the form of a section member forming a channel (13) along the length of the beam, said channel presenting at least in part a tubular zone together with an opening (14) in one of its side faces and containing a duct (15) of rigid insulating material that likewise presents an opening defined by a mouth (18) in register with the opening of the channel, the opening of the duct (15) of insulating material being inside the channel (13), the crossmember (2) being **characterized in that** the mouth (18) is of slightly smaller size than the opening (14) of the channel (13), said crossmember (2), including an interface device (16) in the form of a sleeve passing through the opening (14) of the channel to connect the mouth (18) of the opening of the duct in leaktight manner to a vent (17) situated outside said crossmember (2) and **in that** the interface device is of axial length lying in the range 5 mm to 20 mm.

2. A ventilation crossmember according to claim 1, **characterized in that** the interface device (16) includes a gasket (19) having two lips (20, 21) for clamping onto the mouth (18) of the duct.

3. A ventilation crossmember according to claim 2, **characterized in that** the lips (20, 21) are spaced apart at rest by less than the thickness of the wall of the mouth (18).

4. A ventilation crossmember according to any preceding claim, **characterized in that** the interface device (16) includes on its outside face (24) a shoulder (25) that comes to bear against the outside face of the channel.

5. A ventilation crossmember according to any preceding claim, **characterized in that** the interface device (16) includes on its outside face (24) a plurality of chip-fastener tongues (26) for bearing against the inside face of the channel.

6. A ventilation crossmember according to claim 4 and 5, **characterized in that** the shoulder (25) and the clip-fastener tongues (26) clamp onto the edge of the opening of the channel (13) so that the interface device (16) is rigidly fastened onto said channel.

7. A ventilation crossmember according to any preceding clam, **characterized in that** the interface device (16) includes an outer gasket (27) of deformable material suitable for providing sealing between said interface device and the vent.

8. motor vehicle dashboard panel comprising a crossmember (2) according to any preceding claim, a cover (3) carried by the crossmember (2), and a vent (4) passing through the cover (3) and connected to the ventilation crossmember (2).

## Patentansprüche

1. Lüftungsquerträger (2) für ein Kraftfahrzeug, des Typs, der aufweist: einen Träger (12) in Form eines Profilblechs, das entlang der Länge des trägers einen Kanal (13) ausbildet, wobei der Kanal zumindest zum Teil einen rohrförmigen Bereich sowie eine Öffnung (14) an einer seiner lateralen Seiten aufweist und eine Leitung (15) aus eine isolierenden steifen Material einschließt, die ebenfalls eine Öffnung aufweist, die durch eine Mündung (18) gegenüber der hoffnung des Kanals begrenzt ist, wobei sich die Mündung der Leitung (15) aus isolierendem Material im Inneren des Kanals (13) befindet, **dadurch gekennzeichnet, dass** die Mündung (18) eine geringfügig kleinere Abmessung als die öffnung (14) des Kanals (13) hat, wobei der Querträger (2) eine Schnittstelleneinrichtung (1.6) in Form einer Muffe aufweist, die die Öffnung (14) des Kanals durchquert, um die Mündung (18) der Öffnung der Leitung auf dichte Weise mit einem Lüfter (17) zu verbinden, der außerhalb des Querträgern (2) angeordnet ist, und dass die Schnittstelleneinrichtung eine Axiallänge zwischen 5 mm und 20 mm hat.

2. Lüftungsquerträger gemäß Anspruch 1, **dadurch gekennzeichnet, dass** die Schnittatelleneinrichtung (16) eine zwei Lippen (20, 21) aufweisende Dichtung (19) aufweist, um die Mündung (18) der Leitung zu umschließen.

3. Lüftungsquerträger gemäß Anspruch 2, **dadurch gekennzeichnet, dass** die Lippen (20, 21) im Ruhezustand einen Abstand haben, der kleiner als die Dicke der Wand der Mündung (18) ist.

4. Lüftungsquerträger gemäß irgendeinem der vorhergehenden Ansprüche, **dadurch gekennzeichnet, dass** die Schnittstelleneinrichtung (16) an ihrer Außenseite (24) einen Absatz (25) aufweist, der an der Außenseite des Kanals abgestützt ist.

5. Lüftungsquerträger gemäß irgendeinem der vorhergehenden Ansprüche, **dadurch gekennzeichnet, dass** die Schnittstelleneinrichtung (16) an ihrer Außenseite (24) mehrere Rastzungen (26) aufweist, um an der Innenfläche des Kanals abgestützt zu sein.

6. Lüftungsquerträger gemäß den Ansprüchen 4 und 5, **dadurch gekennzeichnet, dass** der Absatz (25) und die Rastzungen (26) den Öffnungsrand des Kanals (13) derart umschließen, dass die schnittstelleneinrichtung (16) starr an dem Kanal befestigt ist.

7. Baugruppe, auf weisend einen Lüfter (4) und einen Lüftungsquerträger (2) gemäß irgendeinem der vorhergehenden Ansprüche, **dadurch gekennzeichnet, dass** die Schnittstelleneinrichtung (16) eine Außendichtung (27) aus einem verformbaren Material aufweist, die in der Lage ist, die Dichtheit zwischen der Schnittstelleneinrichtung (16) und dem Lüfter (4) sicherzustellen.

8. Armaturenbrett für ein Kraftfahrzeug, aufweisend einen Querträger (2) gemäß irgendeinem der vorhergehenden Ansprüche, eine von dem Querträger (2) getragene Abdickung (3) und einen Lüfter (4), der die Abdeckung (3) durchquert und an den Lüftungsquerträger (2) abgeschlossen ist.
